# EUROPEAN PATENT APPLICATION

(11) **EP 2 442 612 A1**
(43) Date of publication of application: **18.04.2012**
(21) Application number: 10793547.0
(22) Date of filing: 08.06.2010
(51) Int. Cl.: H04W 36/38, H04W 88/12

(54) **METHOD, DEVICE AND COMMUNICATION SYSTEM FOR HANDOVER CONTROL**

(30) Priority: 29.06.2009 CN 200910142291
(71) Applicant: Huawei Technologies Co., Ltd., Shenzhen, Guangdong 518129 (CN)
(72) Inventor: ZHANG, Tao, Shenzhen Guangdong 518129 (CN); LIN, Bo, Shenzhen Guangdong 518129 (CN); WANG, Yan, Shenzhen Guangdong 518129 (CN); CHAI, Li, Shenzhen Guangdong 518129 (CN)
(74) Representative: Körber, Martin Hans
(86) International application number: PCT/CN2010/073674
(87) International publication number: WO 2011/000252

(57) **Abstract**

A handover control method, apparatuses and a communication system are disclosed. In embodiments of the present invention, a control base station (DeNB) of a Relay node is identified according to an established relation between the Relay node and the Control base station, and therefore, a handover request message can be routed to the correct DeNB and finally sent to the RN, and a User Equipment can normally hand over to a cell controlled by the Relay node.

## Description

This application claims priority to Chinese Patent Application No. 200910142291.7, filed with the Chinese Patent Office on June 29, 2009 and entitled "HANDOVER CONTROL METHOD, APPARATUSES AND COMMUNICATION SYSTEM", which is incorporated herein by reference in its entirety.

### FIELD OF THE INVENTION

The present invention relates to the field of communication technologies, and in particular, to a handover control method, apparatuses, and a communication system.

### BACKGROUND OF THE INVENTION

Beyond Third Generation mobile communication system (Beyond Third Generation mobile communication system, B3G) is named International Mobile Telecommunications Advanced (IMT-Advanced) by the International Telecommunication Union Radio (International Telecommunication Union Radio , ITU-R). The IMT-Advanced imposes high requirements on the system capacity. Nevertheless, the high-bandwidth spectrum that supports the high capacity of the IMT-Advanced is generally available in higher bands, but higher bands involve great path loss and penetration loss, and can hardly achieve good coverage.

To meet the requirements of the IMT-Advanced with respect to system capacity and coverage, the prior art introduces a relay technology to improve the system capacity and coverage. In a traditional network, the wireless connection between a base station and a User Equipment is a direct wireless connection, which forms a single-hop network. The relay technology is intended to add one or more relays between the base station and the User Equipment. The relays are responsible for processing and forwarding radio signals sent by the base station at one or more attempts until the User Equipment receives the radio signals. Taking the simple 2-hop relay as an example, a radio link between base station and a User Equipment is split into two radio links, namely, a radio link from the E-UTRAN NodeB to a Relay Node, and a radio link from the Relay Node to the User Equipment, thus making it possible to replace a low-quality link with two high-quality links and achieve higher link capacity and better coverage.

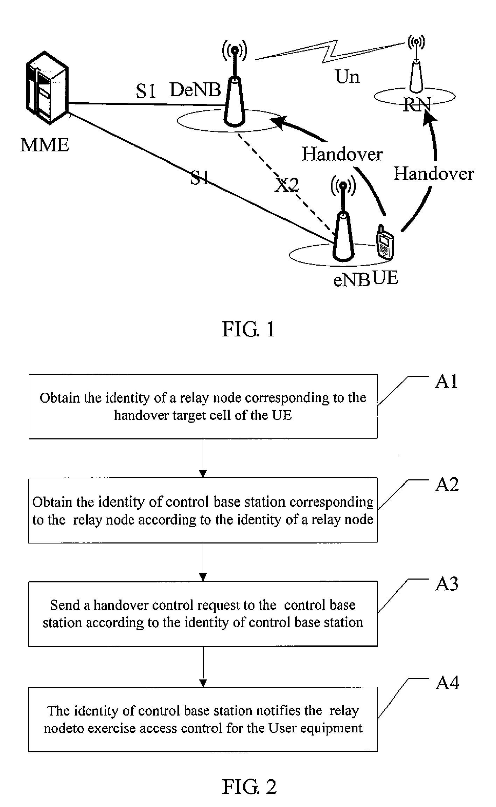

FIG. 1 shows a network topology in which the relay technology is introduced. The network includes a Mobility Management Entity (MME), a base station (E-UTRAN Node B, eNB), an Relay Node (Relay Node, RN), and a control base station (Donor E-UTRAN NodeB, DeNB) of the RN. The DeNB is also an base station, and provides a function of controlling the RN in addition to conventional functions of an eNB. The RN may be fixed or mobile. When the RN is mobile, the DeNB that controls the RN is also variable.

In FIG. 1, the interface between the MME and the eNB is S1, and the interface between the MME and the DeNB is also S1. An X2 interface may exist between the eNB and the DeNB or not. No direct interface exists between the RN and the eNB. A wireless Un interface exists between the RN and the DeNB. The coverage of the eNB and the DeNB may be divided into multiple different cells. When a connected User Equipment moves from a cell of the eNB to a cell of the DeNB, a handover process will be triggered. Like the eNB and DeNB, the RN is equivalent to an base station. The coverage of the RN may also be divided into different cells. When a connected UE moves from a cell of the eNB to a cell of the RN, a handover process will be triggered.

In the process of researching and practicing the prior art, the inventor of the present invention finds that in the prior art, when the User Equipment (User Equipment,UE) hands over from the eNB to the RN, the UE can interact with the RN to obtain the identity of the RN cell (RN_PCI), and report the RN_PCI to the network. According to the RN_PCI, the network determines the RN to which the UE will hand over, but the network is unable to determine the control base station that controls the RN, and unable to send a Handover_Request message to the correct DeNB. Consequently, the handover process cannot proceed normally.

### SUMMARY OF THE INVENTION

Embodiments of the present invention provide a handover control method, apparatuses, and a communication system to route a handover control request to a correct DeNB and ensure the normal handover process.

A handover control method provided in an embodiment of the present invention includes:
obtaining an identity of a relay node corresponding to a handover target cell of a user equipment;
obtaining an identity of control base station corresponding to the relay node according to the identity of the relay node; and
sending a handover control request to the control base station according to the identity of control base station, so that the control base station notifies the relay node of performing access control for the user equipment.

A handover control method provided in an embodiment of the present invention includes:

receiving, by a user equipment, a broadcast message sent from a relay node, wherein the broadcast message carries information about a routing relation between the relay node and a control base station on which the relay node belongs; and

sending, by the user equipment, information about the routing relation to an base station to which the user equipment is currently attached, so that the base station notifies the control base station corresponding to the relay node to perform access control for the user equipment according to the information about routing relation.

A handover control apparatus provided in another embodiment of the present invention includes:

a relay node identity obtaining unit, configured to obtain an identity of a Relay node corresponding to a handover target cell of a user equipment;

a control base station identity obtaining unit, configured to obtain a identity of control base station corresponding to the relay node according to the identity of the relay node obtained by the relay node identity obtaining unit; and

a handover control request sending unit, configured to send a handover control request to the control base station according to the identity of control base station obtained by the control base station identity obtaining unit, so that the control base station notifies the relay node of performing access control for the user equipment..

An access control apparatus provided in another embodiment of the present invention includes:

a receiving unit, configured to receive a handover request message, the handover request message comprising an identity of a target cell of a user equipment; and

a handover controlling unit, configured to search for a relay node that serves the target cell according to the identity of the target cell, and notify the search Relay node of controlling access of the user equipment..

A network relay apparatus provided in another embodiment of the present invention includes:

an information reporting unit, configured to report an identity of a relay node of itself and a list of served cells to a corresponding control base station; and

an access processing unit, configured to receive a notification from the control base station and perform access control for a user equipment.

A network relay apparatus provided in another embodiment of the present invention includes:

a control base station Identity obtaining unit, configured to obtain an identity of control base station of the network relay apparatus;

a information about the route generating unit, configured to generate the information about the route according to the identity of control base station and an identity of a relay node of the network relay apparatus; and

a broadcasting unit, configured to broadcast the information about the route generated by the information about the route generating unit throughout cell coverage of the network relay apparatus.

A UE provided in another embodiment of the present invention includes:

a broadcast message receiving unit, configured to receive a broadcast message sent by a relay node, wherein the broadcast message carries information about a routing relation between the relay node and a control base station of the relay node;

a information about the route sending unit, configured to send the routing relation information to an base station to which the user equipment is currently attached, so that the base station notifies the control base station corresponding to the relay node of performing access control for the User equipment according to the routing relation information.

A communication system provided in another embodiment of the present invention includes: a handover control apparatus, an access control apparatus, an RN, and a UE, where

the User equipment is configured to send an identity of the relay node corresponding to a handover target cell to the handover control apparatus, and access the target cell under control of the relay node;

the handover control apparatus is configured to: obtain the identity of the relay node corresponding to the handover target cell of the user equipment, obtain an identity of control base station corresponding to the relay node according to the identity of the relay node, and send a handover control request to the control base station according to the identity of control base station;

the access control apparatus is configured to receive the handover control request from the handover control apparatus, and notify the relay node of performing access control for the user equipment; and

the relay node is configured to receive the notification from the access control apparatus, and execute the access control for the user equipment.

In the embodiments of the present invention, the DeNB of the RN is identified according to the relation between the RN and the DeNB, and therefore, the Handover Request message can be routed to the correct DeNB and finally sent to the RN, and the UE can normally hand over to the cell controlled by the RN.

### BRIEF DESCRIPTION OF THE DRAWINGS

To describe the technical solution under the present invention more clearly, the following outlines the accompanying drawings involved in the embodiments of the present invention. Apparently, the accompanying drawings outlined below are not exhaustive, and persons of ordinary skill in the art can derive other drawings from such accompanying drawings without any creative effort.

FIG. 1 shows a network topology in which a relay technology is introduced in the prior art;

FIG. 2 is a flowchart of a handover control method in a first embodiment of the present invention;

FIG. 3 is a flowchart of a handover control method in a second embodiment of the present invention;

FIG. 4 is a signaling flowchart of a first application instance in the second embodiment of the present invention;

FIG. 4a is a schematic flowchart of a handover control method in the second embodiment of the present invention;

FIG. 5 is a flowchart of a handover control method in a third embodiment of the present invention;

FIG. 6 shows comparison between identity of the relay node and control base station ID in the third embodiment of the present invention;

FIG. 7 is a flowchart of a handover control method in a fourth embodiment of the present invention;

FIG. 8 is a signaling flowchart of an application instance in the fourth embodiment of the present invention;

FIG. 9 is a flowchart of a handover control method in a fifth embodiment of the present invention;

FIG. 10 is a flowchart of a handover control method in a sixth embodiment of the present invention;

FIG. 11 is a flowchart of a handover control method in a seventh embodiment of the present invention;

FIG. 12 is a flowchart of a handover control method in an eighth embodiment of the present invention;

FIG. 13 is a schematic structure diagram of a handover control apparatus in a ninth embodiment of the present invention;

FIG. 14 is a schematic structure diagram of an access control apparatus in a tenth embodiment of the present invention;

FIG. 15 is a schematic structure diagram of a network relay apparatus in an eleventh embodiment of the present invention;

FIG. 16 is a schematic structure diagram of a network relay apparatus in a twelfth embodiment of the present invention;

FIG. 17 is a schematic structure diagram of a UE in a thirteenth embodiment of the present invention; and

FIG. 18 is a schematic structure diagram of a communication system in a fourteenth embodiment of the present invention.

### DETAILED DESCRIPTION OF THE EMBODIMENTS

The embodiments of the present invention provide a handover control method, apparatuses, and a communication system, as detailed below.

### Embodiment 1

As shown in FIG. 2, a handover control method includes the following steps:

A1. Obtain an identity of the relay node corresponding to a handover target cell of a UE.

A2. Obtain a identity of control base station corresponding to the RN according to the identity of the relay node.

In this embodiment, a routing relation between the RN and the control base station is preset. After the UE obtains the identity of the relay node, the UE can obtain the corresponding control base station according to the routing relation.

A3. Send a handover control request to the control base station according to the identity of control base station, so that the control base station notifies the RN to perform access control for the UE.

In this embodiment, according to the relation between the RN and the identity of control base station, the control base station(DeNB) of the RN is identified, and therefore, the Handover Request message can be routed to the correct DeNB and finally sent to the RN; the RN completes access control for the UE, and the UE can normally hand over to the cell controlled by the RN.

### Embodiment 2

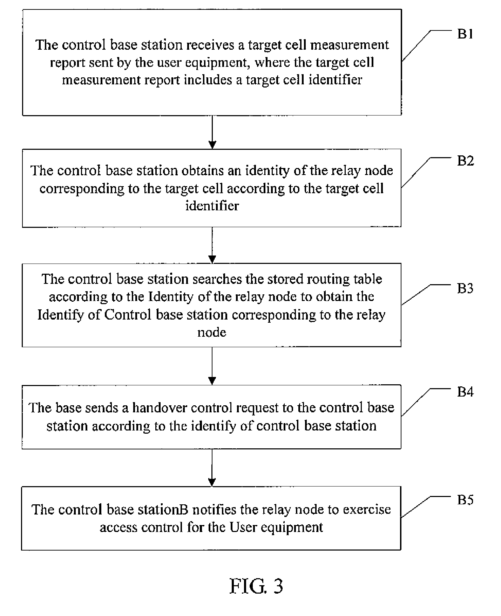

As shown in FIG. 3, a handover control method includes the following steps:

B1. The base station receives a target cell measurement report sent by the UE. The target cell measurement report includes a target cell identity.

In this embodiment, the target cell identity may be an E-UTRAN Cell Global Identity (E-UTRAN Cell Global Identity, ECGI) or a Physical Cell Identity (Physical Cell Identity, PCI).

B2. The base station obtains an identity of the relay node corresponding to the target cell according to the target cell identity.

The ECGI includes an identity of the relay node (generally, the initial 20 bits of the ECGI indicate the identity of the base station or RN corresponding to the cell). If the target cell identity is an ECGI, the base station can parse the ECGI to obtain the identity of the relay node from the ECGI.

The PCI does not include the identity of the relay node, and therefore, if the cell ID of the measurement report is a PCI, the RN_ID can be obtained in the following way:

The RN reports the PCI of all cells and RN_ID of all cells of the RN to the DeNB, and then the DeNB transmits the information about a route to an adjacent eNB. The information about the route may be transmitted periodically, or triggered by an event (such as joining of a new RN). The transmitting mode may be: The control base station sends the information about the route to the adjacent eNB through an X2 interface between the base station and the base station; or the DeNB sends an update message that carries the information about the route through an S1 interface between the DeNB and the MME, and the MME forwards the information about the route to the control base station adjacent to the base station through the S1 interface. According to the update message, the base station stores information about the routing relation between the identity of the relay node and the cell identity locally. When receiving the target cell identity (here the target cell identity is a PCI) in the measurement report sent by the UE, the base station obtains the identity of the relay node corresponding to the PCI according to the information about the routing relation between the identity of the relay node and the PCI.

B3. The base station searches a stored routing table according to the identity of the relay node to obtain the identity of control base station corresponding to the RN.

In this embodiment, when a new RN is added under the control base station, the base station receives the update message from the control base station, where the update message carries the information about the route between the control base station and the RN under control of the control base station; and the base station updates the stored routing table according to the information about the route.

In this embodiment, the information about the route between the control base station and the RN under control of the control base station may be generated in the following way:
the RN reports the identity of the relay node of the RN to the control base station; and
the control base station receives the identity of the relay node, and generates the information about the route according to the identity of control base station and the identity of the relay node.

Step B2 may be combined with step B3 into one step: The base station searches the stored routing table according to the identity of the target cell to obtain the identity of control base station corresponding to the RN of this cell.

B4. The base station sends a handover control request to the control base station according to the identity of control base station. In this embodiment, in the case that an X2 communication interface exists between the base station and the DeNB, the base station may send the handover control message to the DeNB through the X2 interface.

B5. The control base station notifies the RN to perform access control for the UE.

The notification may be sent in many ways. For example, the handover control request in step B4 may be forwarded to the RN directly. For the detailed format and content of the handover control request, see the process of access control executed by the base station for the UE in the prior art, which is not repeated herein.

In this embodiment, the base station stores the routing table of the control base station of the neighboring cell. When the UE hands over to the RN of the neighboring cell, the base station searches the routing table to obtain the identity of control base station of the neighboring cell, and sends a Handover Request message to the corresponding identity of control base station. In this way, under control of the identity of control base station, the RN enables the UE to access the target cell.

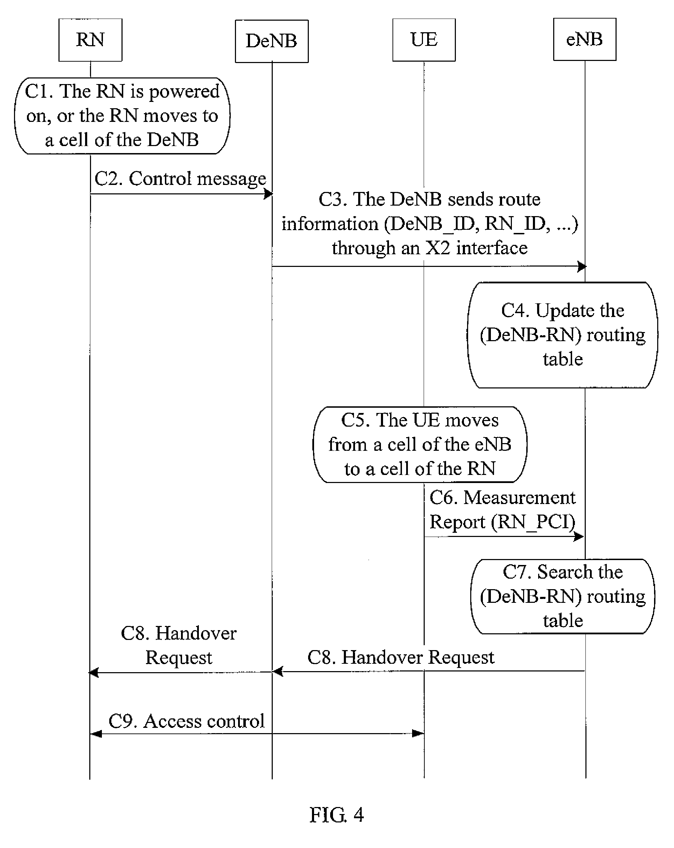

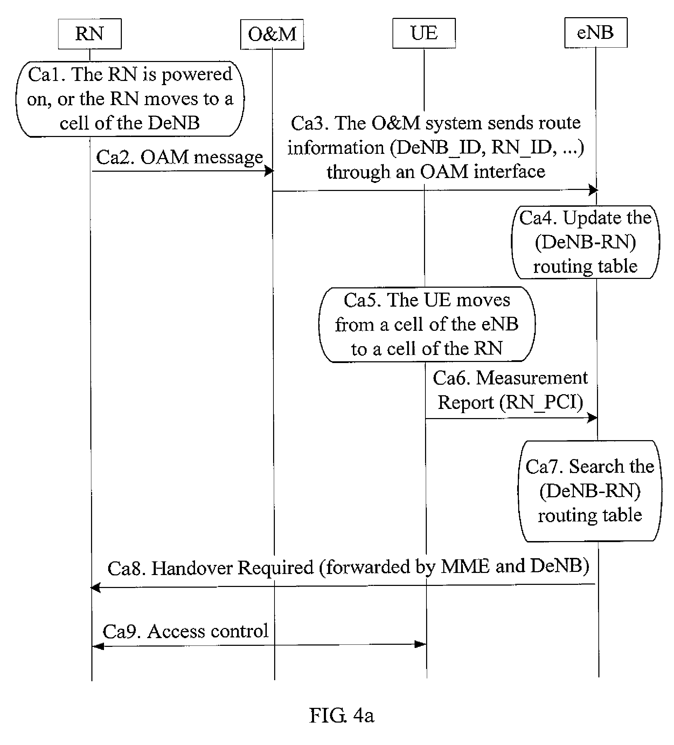

The following gives the first application instance of applying the method provided in the second embodiment of the present invention to an LTE-Advanced system. This application instance is applicable to the scenario where an X2 communication interface exists between base stations. As shown in FIG. 4, the signaling flow includes the following steps:

C1. The RN is powered on in the coverage of the DeNB, or the RN moves to a cell of the DeNB.

C2. The RN sends a control message (Control_Message_1) to the DeNB. The control message carries the RN_ID of the RN.

C3. The DeNB generates information about the route between the DeNB and the RN, and sends to the eNB the information about the route through a message (for example, sending through an eNB_Configuration_Update message) through an X2 interface.

It is understandable that the information about the route indicates the communication path from the DeNB to the RN, and includes the mapping relation between the DeNB_ID and the RN_ID or further includes the IDs of the intermediate network elements between the DeNB and the RN in the case of multiple relays.

In step C3 in this application instance, if an X2 interface exists between the base stations, the DeNB sends the information about the route to multiple base stations adjacent to the DeNB. In this embodiment, it is assumed that only one eNB exists.

C4. The eNB updates the routing table according to the information about the route.

C5. The terminal UE in the connected state moves from a cell of the eNB to a cell of the RN.

C6. The UE detects the cell identity of the RN (namely, RN_PCI), and sends the RN_PCI through a measurement report(Measurement Reports) to the eNB.

C7. The eNB searches the DeNB_RN routing table to determine the control base station of the RN.

C8. The eNB sends a Handover_Request message to the DeNB through the X2 interface. The information included in this message is forwarded by the DeNB and finally sent to the RN.

C9. The RN executes access control.

For the details about how the RN executes access control for the UE, see the access control procedure of the base station in the prior art, which is not repeated herein.

When the UE hands over from the eNB to the RN, the UE can interact with the RN to obtain the identity of the RN cell (RN_PCI), and report the RN_PCI to the network. According to the RN_PCI, the network determines the RN to which the UE will hand over, but the network is unable to determine the control base station(DeNB) that controls the RN and unable to send the Handover Request message to the correct DeNB. Consequently, the handover process cannot proceed normally. To solve such a technical problem, the present invention provides a handover control method. FIG. 4a is a flowchart of a handover control method in the second embodiment of the present invention. This embodiment is applicable to the scenario where no X2 communication interface exists between the TE-Advance system and the base station. For lack of the X2 interface, the information about the route in this embodiment needs to be configured by an Operation and Maintenance (O&M) system. This embodiment includes the following steps:

Cal. The RN is powered on in the coverage of the DeNB, or the RN moves to a cell of the DeNB.

Ca2. The RN sends a control message (Control_Message_1) to the O&M system. The control message includes the identity of the RN RN_ID.

Ca3. The O&M (operation and maintenance) system generates information about the route between the DeNB and the RN, and sends the information about the route to the eNB through an OAM message, for example, sending through an eNB_Configuration_Update message.

The information about the route indicates the communication path from the DeNB to the RN, and includes the mapping relation between the DeNB_ID and the RN_ID or further includes the IDs of the intermediate network elements between the DeNB and the RN in the case of multiple relays.

In step Ca3 in this application instance, no X2 interface exists between the base station and the base station, and the O&M system sends the information about the route to multiple base stations adjacent to the DeNB. In this embodiment, it is assumed that only one eNB is adjacent to the DeNB.

Ca4. The eNB updates the routing table according to the information about the route.

Ca5. The connected UE moves from a cell of the eNB to a cell of the RN.

Ca6. The UE detects the cell identity of the RN (namely, RN_PCI), and sends the RN_PCI through a measurement report(Measurement Reports) to the eNB.

Ca7. The eNB searches the DeNB-RN routing table to determine the control base station of the RN.

Ca8. The eNB sends a Handover_Required message to an MME through an S1 interface. The information carried in this message is forwarded by the MME and the DeNB and finally sent to the RN.

Ca9. The RN executes access control.

For the details about how the RN executes access control for the UE, see the access control procedure of the base station in the prior art, which is not repeated herein.

In this embodiment, no X2 interface exists between the base stations, the O&M system sends to the base station the routing table of the relay node (RN) of the neighboring cell and the corresponding control base station(DeNB), and the base station obtains and stores the routing table. When the UE hands over to the neighboring cell, the base station searches the routing table to obtain the identity of control base station of the RN corresponding to the neighboring cell, and sends a Handover Request message to the corresponding control base station through the MME. In this way, under control of the control base station, the RN enables the UE to access the target cell.

### Embodiment 3

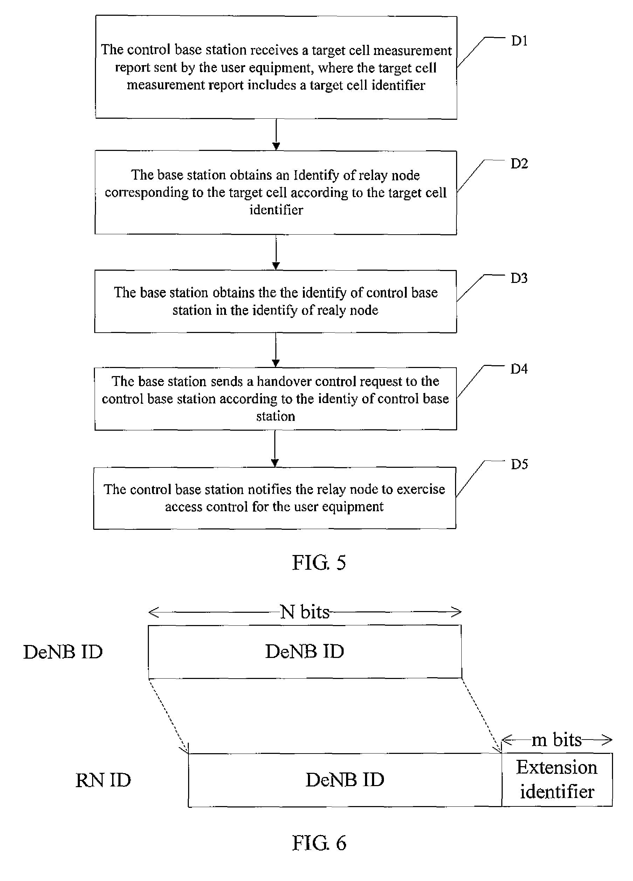

As shown in FIG. 5, a handover control method includes the following steps:

D1. The base station receives a target cell measurement report sent by the UE. The target cell measurement report includes a target cell identity.

D2. The base station obtains an identity of the relay node corresponding to the target cell according to the target cell identity.

In this embodiment, an identity of the relay node includes a identity of control base station of the RN and an extension identity which differentiates between RNs under the same control base station. It is understandable that after the RN is powered on in the coverage of the control base station or moves to the coverage of the control base station, the control base station allocates an identity of the relay node to the RN.

FIG. 6 shows comparison between the allocated RN_ID and identity of control base station in this embodiment, supposing that the length of a identity of control base station is N bits. In this embodiment, the length of RN_ID is (N+m) bits, where N bits are the identity of control base station, and the subsequent m bits are the extension part. The extension bits may be any values that make the RN different from other RNs under the same DeNB.

D3. The base station obtains the identity of control base station in the identity of the relay node.

In this embodiment, after the eNB obtains an identity of the relay node composed of (N+m) bits, the eNB recognizes that the ID is an identity of an RN rather than an identity of an ordinary base station according to the length of the ID. Afterward, the eNB retrieves the initial N bits from the (N+m) bits of the ID to form the identity of control base station of the RN and obtains the routing relation between the RN and the DeNB of the RN.

D4. The base station sends a handover control request to the control base station according to the identity of control base station, so that the control base station notifies the RN to perform access control for the UE.

In this embodiment, in the case that an X2 communication interface exists between the base station and the base station, the base station may send the handover control message to the DeNB through the X2 interface.

In the third embodiment, the identity of control base station in the identity of the relay node is extended so that the corresponding identity of control base station can be obtained according to the identity of the relay node in the process of exercising handover control. In this way, the handover control signaling is routed to the correct control base station, and the UE executes access control in the target cell.

### Embodiment 4

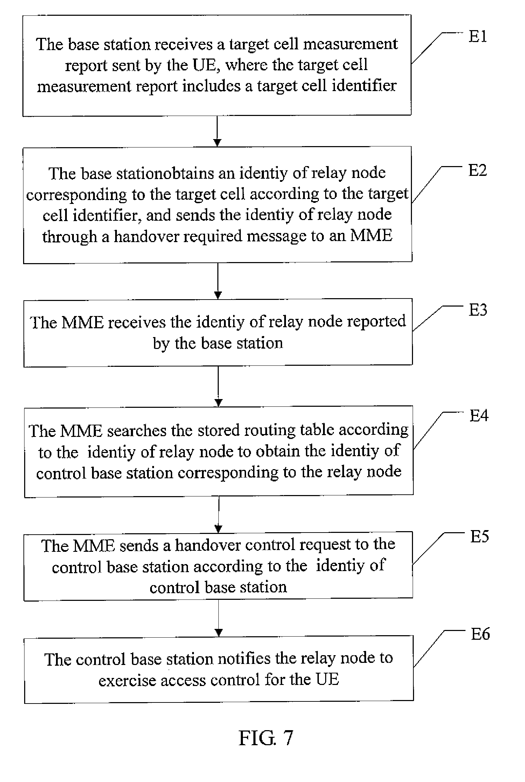

As shown in FIG. 7, a handover control method includes the following steps:

E1. The base station receives a target cell measurement report sent by the UE. The target cell measurement report includes a target cell identity.

E2. The base station obtains an identity of the relay node corresponding to the target cell according to the target cell identity, and sends the identity of the relay node through a Handover Required message to an MME.

E3. The MME receives the identity of the relay node reported by the base station.

E4. The MME searches the stored routing table according to the identity of the relay node to obtain the identity of control base station corresponding to the RN.

It is understandable that, when a new RN is added under the control base station, the MME receives an update message from the control base station, where the update message carries the information about the route between the control base station and the RN under control of the control base station; and the MME updates the stored routing table according to the information about the route.

In this embodiment, the information about the route between the control base station and the RN under control of the control base station may be generated in the following way:
the RN reports the identity of the relay node of the RN to the control base station; and
the control base station receives the identity of the relay node, and generates the information about the route according to the identity of control base station and the identity of the relay node.

E5. The MME sends a handover control request to the control base station according to the identity of control base station.

E6. The control base station notifies the RN to perform access control for the UE.

The fourth embodiment differs from the second embodiment in that: The fourth embodiment is applicable to the scenario where no X2 interface exists between the base station and the control base station, and therefore, the MME executes handover control, and the base station and the control base station can communicate through an S1 interface connected to the MME.

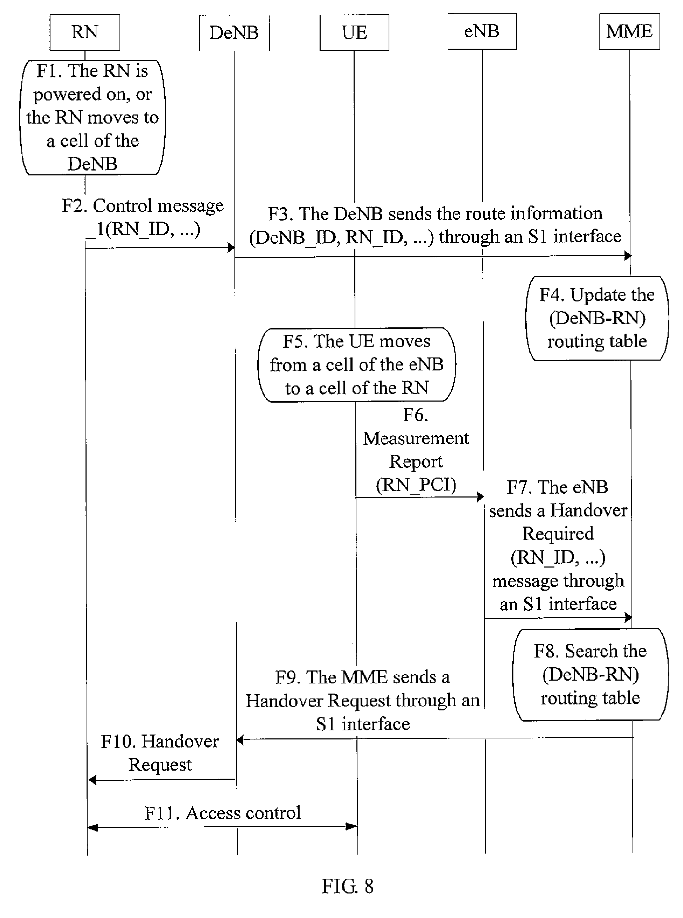

The following gives an application instance of applying the method provided in the fourth embodiment of the present invention to an LTE-Advanced system. This application instance is applicable to the scenario where no X2 communication interface exists between the base station and the control base station. As shown in FIG. 8, the signaling flow includes the following steps:

F1. The RN is powered on in the coverage of the DeNB, or the RN moves to a cell of the DeNB.

F2. The RN sends a control message (Control_Message_1) to the DeNB. The control message includes the RN_ID of the RN.

F3. The DeNB generates information about the route between the DeNB and the RN, and sends to the MME the information about the route through an S1 message, for example, sending through an eNB_Configuration_Update message.

F4. The MME updates the stored DeNB-RN routing table according to the information about the route in the S1 message.

F5. The connected UE moves from a cell of the eNB to a cell of the RN.

F6. The UE detects the RN_PCI of the RN and sends the RN_PCI to the eNB through a measurement report.

F7. The eNB sends an S1 message (for example, Handover Required) to the MME. The message includes the RN_ID of the RN.

F8. The MME searches the DeNB-RN routing table to determine the control base station (DeNB) of the RN.

F9. The MME sends an S1 handover request Handover_Request to the control base station(DeNB) of the RN.

F10. The DeNB sends the handover request to the RN.

F11. The RN executes access control for the UE.

### Embodiment 5

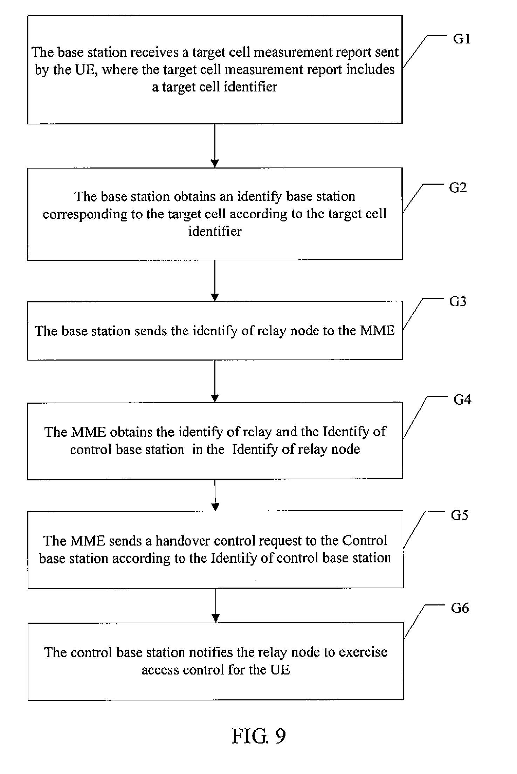

As shown in FIG. 9, a handover control method includes the following steps:

G1. The base station receives a target cell measurement report sent by the UE. The target cell measurement report includes a target cell identity.

G2. The base station obtains an identity of the relay node corresponding to the target cell according to the target cell identity.

In this embodiment, an identity of the relay node includes a identity of control base station of the RN and an extension identity which differentiates between RNs under the same control base station. It is understandable that after the RN is powered on in the coverage of the control base station B or moves to the coverage of the control base station, the control base station allocates an identity of the relay node to the RN.

FIG. 6 shows comparison between the allocated identity of the relay node and identity of control base station in this embodiment. For the detailed parameter description, see the third embodiment, which is not repeated herein.

G3. The base station sends the identity of the relay node to the MME.

G4. The MME obtains the identity of the relay node, and obtains the identity of control base station in the identity of the relay node.

G5. The MME sends a handover control request to the control base station according to the identity of control base station.

G6. The control base station notifies the RN to perform access control for the UE.

The fifth embodiment differs from the third embodiment in that: The fifth embodiment is applicable to the scenario where no X2 interface exists between the base station and the control base station, and therefore, the MME obtains the identity of control base station in the identity of the relay node, and sends a handover control request to the control base station to control the UE in accessing the RN.

### Embodiment 6

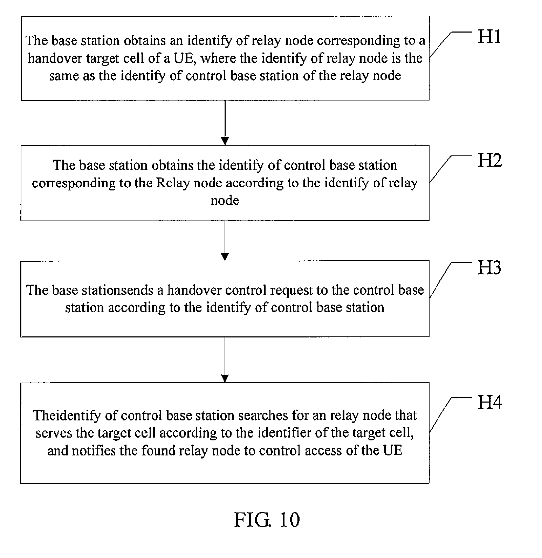

As shown in FIG. 10, a handover control method includes the following steps:

H1. The base station obtains an identity of the relay node corresponding to a handover target cell of a UE. The identity of the relay node is the same as the identity of control base station of the RN.

In this embodiment, before step H1, the DeNB may allocate the identity of the control base station itself as an identity of the relay node to the RN when the RN accesses the control base station.

H2. The base station obtains the identity of control base station corresponding to the RN according to the identity of the relay node.

In this embodiment, the identity of the relay node is set to be the same as the identity of control base station of the RN, and therefore, the identity of control base station is known once the base station obtains the identity of the relay node.

H3. The base station sends a handover control request to the control base station according to the identity of control base station, where the handover control request carries the identity of the handover target cell.

In this embodiment, in the case that an X2 interface exists between the base station and the control base station, the base station can send the handover request to the control base station through the X2 interface directly.

H4. The control base station searches for an RN that serves the target cell according to the identity of the target cell, and notifies the search RN to control access of the UE.

In this embodiment, the control base station searches for the RN of the target cell according to the identity of the target cell in any of the following modes:

Mode 1:

The control base station sends a Handover Request message to all RNs controlled by the control base station, where the Handover Request message carries the identity of the target cell.

The RN receives the Handover Request message and judges whether the target cell identity in the Handover Request message corresponds to the cell served by the RN, and, if the target cell identity in the Handover Request message corresponds to the cell served by the RN, executes access control for the UE.

Mode 2:

The RN reports a list of cells served by the RN to the control base station beforehand, and the control base station stores the list. When the control base station searches for the RN that serves the target cell:
the control base station searches the list of cells served by each RN controlled by the control base station according to the identity of the target cell, and obtains the RN that serves the target cell; and the list of cells is reported by the RN; and
the control base station notifies the search RN to perform access control for the UE.

### Embodiment 7

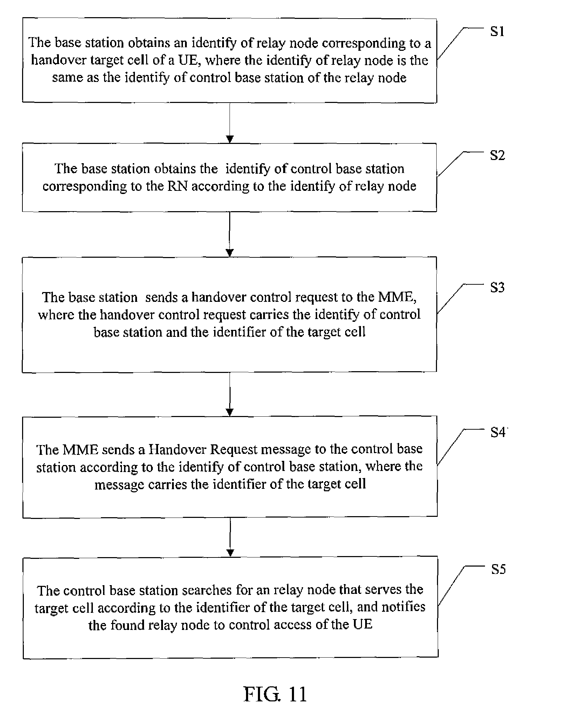

As shown in FIG. 11, a handover control method includes the following steps:

S1. The base station obtains an identity of the relay node corresponding to a handover target cell of a UE. The identity of the relay node is the same as the identity of control base station of the RN.

The control base station may allocate the identity of control base station (DeNB_ID) as an identity of the relay node to the RN when the RN accesses the control base station.

S2. The base station obtains the identity of control base station corresponding to the RN according to the identity of the relay node.

In this embodiment, the identity of the relay node is set to be the same as the identity of control base station of the RN, and therefore, the identity of control base station, is known once the base station obtains the identity of the relay node.

S3. The base station sends a handover control request to the MME, where the handover control request carries the identity of control base station and the identity of the target cell.

S4. The MME sends a Handover Request message to the control base station according to the identity of control base station. The message carries the identity of the target cell.

In this embodiment, in the case that no X2 interface exists between the base station and the control base station, the handover control can be executed through the MME due to the existence of the S1 interface between the base station and the MME and the S1 interface between the control base station and the MME.

S5. The control base station searches for an RN that serves the target cell according to the identity of the target cell, and notifies the search RN to control access of the UE.

For the detailed process of searching for the RN that serves the target cell, see step H4 in the fifth embodiment.

In the sixth embodiment and the seventh embodiment of the present invention, the identity of control base station serves as the identity of the relay node. Therefore, the handover control apparatus can find the corresponding control base station according to the identity of the relay node directly, and find the RN that serves the target cell according to the target cell identity, thus controlling the UE in accessing the RN.

### Embodiment 8

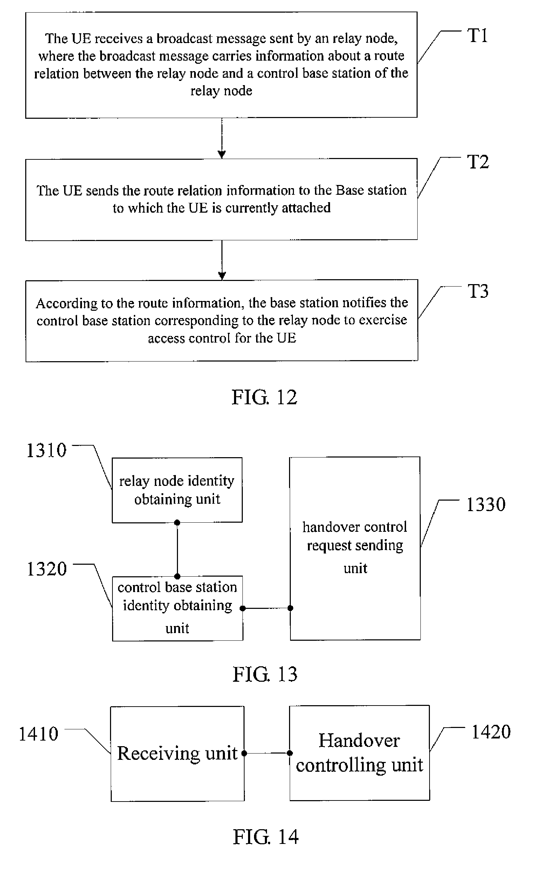

As shown in FIG. 12, a handover control method includes the following steps:

T1. The UE receives a broadcast message sent by an RN, where the broadcast message carries information about a routing relation between the RN and a control base station of the RN.

In this embodiment, the RN broadcasts the routing relation between the RN and the control base station through a broadcast message. The broadcast message may be sent through a preset channel, and the UE can monitor the preset channel to receive the broadcast message from the RN.

T2. The UE sends the routing relation information to the base station to which the UE is currently attached.

T3. According to the information about the route, the base station notifies the control base station corresponding to the RN to perform access control for the UE.

The base station may notify the control base station to perform access control in the following way:
the base station obtains the control base station corresponding to the RN according to the routing relation information;
in the case that a communication interface exists between the base station and the control base station, the base station sends a handover control request to the control base station through the communication interface;
in the case that no communication interface exists between the base station and the control base station, the base station sends a handover control request that carries a routing relation to the MME; and the MME sends the handover control request to the control base station; and
after receiving the handover control request, the control base station notifies the RN to perform access control for the UE.

In the eighth embodiment, the RN broadcasts the routing relation between the RN and the control base station through a broadcast message, and the UE ready for accessing the RN reports the received broadcast message to the base station for the purpose of access control.

Persons of ordinary skill in the art should understand that all or part of the steps of the method in the embodiments of the present invention may be implemented by a program instructing relevant hardware. The program may be stored in a computer readable storage medium. The storage medium may be a Read Only Memory (ROM), a Random Access Memory (RAM), a magnetic disk, or a Compact Disk-Read Only Memory (CD-ROM).

### Embodiment 9

As shown in FIG. 13, a handover control apparatus includes:
an identity of the relay node obtaining unit 1310, configured to obtain an identity of the relay node corresponding to a handover target cell of a UE;
a identity of control base station obtaining unit 1320, configured to obtain a identity of control base station corresponding to an RN according to the identity of the relay node obtained by the identity of the relay node obtaining unit 1310; and
a handover control request sending unit 1330, configured to send a handover control request to a control base station according to the identity of control base station obtained by the identity of control base station obtaining unit 1320, so that the control base station notifies the RN to perform access control for the UE.

In this embodiment, the identity of control base station obtaining unit 1320 may obtain the identity of control base station in many modes, as exemplified below:

Mode 1: The identity of control base station obtaining unit is configured to: receive an update message sent by the control base station, where the update message carries the information about the route between the control base station and the RN controlled by the control base station; update the stored routing table according to the information about the route; and search the stored routing table according to the identity of the relay node to obtain the identity of control base station corresponding to the RN.

Mode 2: The identity of the relay node includes the identity of control base station of the RN and an extension identity, where the extension identity is used for differentiating between RNs under the same control base station, and the identity of control base station obtaining unit obtains the identity of control base station in the identity of the relay node.

The handover control apparatus in this embodiment is generally integrated in the existing base station or MME to execute handover control for the UE.

When the apparatus in this embodiment is integrated in the existing base station, the identity of the relay node obtaining unit 1310 is configured to receive the target cell measurement report that carries a target cell identity from the UE, and obtain the identity of the relay node corresponding to the target cell according to the target cell identity.

When the apparatus in this embodiment is integrated in the existing MME, the identity of the relay node obtaining unit 1310 is configured to receive the identity of the relay node reported by the base station.

### Embodiment 10

As shown in FIG. 14, an access control apparatus includes:
a receiving unit 1410, configured to receive a Handover Request message that carries an identity of a target cell of a UE; and
a handover controlling unit 1420, configured to search for an RN that serves the target cell according to the identity of the target cell, and notify the search RN to control access of the UE.

The access control apparatus in this embodiment may be integrated in the control base station(DeNB) to perform access control for the UE.

### Embodiment 11

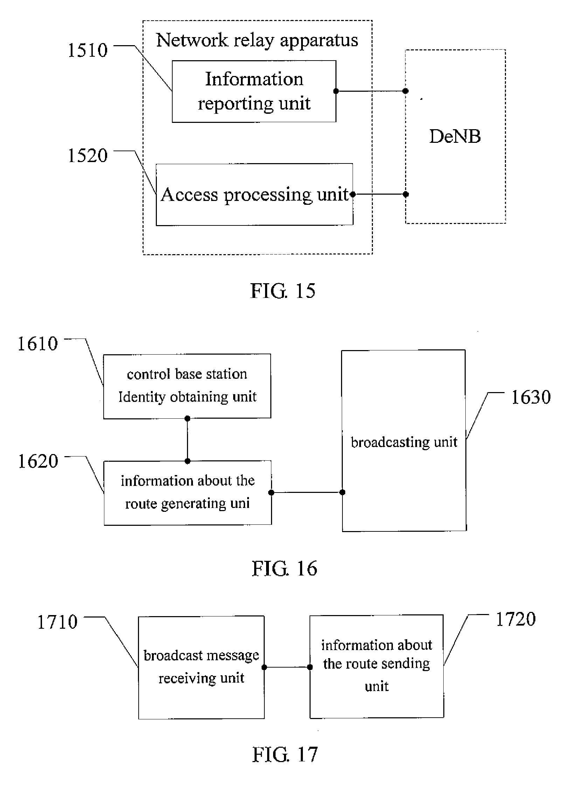

As shown in FIG. 15, a network relay apparatus includes:
an information reporting unit 1510, configured to report an identity of the relay node of the network relay apparatus and a list of cells served by the network relay apparatus to a corresponding control base station; and
an access processing unit 1520, configured to receive a notification from the control base station and perform access control for a UE.

The network relay apparatus in this embodiment reports the identity of the relay node of the network relay apparatus and a list of cells served by the network relay apparatus to the control base station so that the control base station can route the access control message to the RN correctly and perform access control for the UE.

### Embodiment 12

As shown in FIG. 16, a network relay apparatus includes:
a identity of control base station obtaining unit 1610, configured to obtain a identity of control base stationof the network relay apparatus;
a information about the route generating unit 1620, configured to generate information about the route according to the identity of control base station and an identity of the relay nodeof the network relay apparatus; and
a broadcasting unit 1630, configured to broadcast the information about the route generated by the information about the route generating unit throughout cell coverage of the network relay apparatus.

The network relay apparatus in this embodiment sends broadcast messages so that the UE ready for accessing the network relay apparatus can obtain the information about the route between the network relay apparatus and the control base station in time and implement handover.

### Embodiment 13

As shown in FIG. 17, a UE includes:
a broadcast message receiving unit 1710, configured to receive a broadcast message sent by an RN, where the broadcast message carries information about a routing relation between the RN and a control base station of the RN; and
a information about the route sending unit 1720, configured to send the routing relation information to an base station to which the UE is currently attached, so that the base station notifies the control base station of the RN to perform access control for the UE according to the routing relation information.

The UE in this embodiment reports the information about the route between the control base station and the RN corresponding to the handover target cell to the current base station, and therefore, the current base station can route the Handover Request message to the correct control base station, and the UE can hand over between cells.

### Embodiment 14

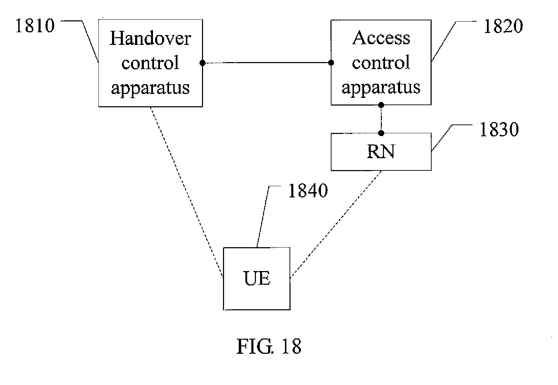

As shown in FIG. 18, a communication system includes a handover control apparatus 1810, an access control apparatus 1820, an RN 1830, and a UE 1840, where:
the UE 1840 is configured to send an identity of the relay node corresponding to a handover target cell to the handover control apparatus, and access the target cell under control of the RN;
the handover control apparatus 1810 is configured to: obtain the identity of the relay node corresponding to the handover target cell of a UE, obtain a identity of control base station corresponding to the RN according to the identity of the relay node, and send a handover control request to the access control apparatus 1820 according to the identity of control base station;
the access control apparatus 1820 is configured to receive the handover control request from the handover control apparatus 1810, and notify the RN 1830 to perform access control for the UE; and
the RN 1830 is configured to receive the notification from the access control apparatus 1820, and perform access control for the UE 1840.

The communication system provided in the fourteenth embodiment identifies the control base station of the RN according to the relation between the RN and the control base station, and therefore, the Handover Request message can be routed to the correct control base station and finally sent to the RN, and the UE can normally hand over to the cell controlled by the RN.

Expounded above are a handover control method, apparatuses, and a communication system under the present invention. Some exemplary embodiments are provided for describing the principle and implementation of the invention; however, the embodiments are only intended to help understand the method and core idea of the invention. It is apparent that those skilled in the art can make modifications and variations to the invention without departing from the spirit and scope of the invention. Therefore, the specification shall not be construed as a limitation to the invention.

After reading the foregoing embodiments, those skilled in the art are clearly aware that the embodiments of the present invention may be implemented through hardware, or, preferably in most circumstances, through software in addition to a necessary universal hardware platform. Therefore, the technical solution under the present invention or its novelty in contrast to the prior art may be embodied as a software product. The software product may be stored in a computer readable storage medium and incorporates several instructions for instructing a computer device (for example, a personal computer, a server, or a network device) to execute the method specified in any embodiment of the present invention.

Although the invention is described through some exemplary embodiments, the invention is not limited to such embodiments. It is apparent that those skilled in the art can make modifications and variations to the invention without departing from the spirit and scope of the invention. The invention is intended to cover the modifications and variations provided that they fall within the scope of protection defined by the following claims or their equivalents.

## Claims

1. A handover control method, comprising:
obtaining an identity of a relay node corresponding to a handover target cell of a user equipment;
obtaining an identity of control base station corresponding to the relay node according to the identity of the relay node; and
sending a handover control request to the control base station according to the identity of control base station, so that the control base station notifies the relay node of performing access control for the user equipment.

2. The method according to claim 1, wherein the obtaining the identity of the relay node corresponding to the handover target cell of the User equipment comprises:
receiving, by an base station, a target cell measurement report sent by the user equipment, wherein the target cell measurement report comprises a target cell identity; and
obtaining, by the base station, the identity of the relay node corresponding to a target cell according to the target cell identity.

3. The handover control method according to claim 2, wherein the obtaining the identity of control base station corresponding to the relay node according to the identity of the relay node comprises:
searching, by the base station, a stored routing table according to the identity of the relay node, so as to obtain the identity of control base station corresponding to the relay node.

4. The method according to claim 3, further comprising:
receiving, by the base station, an update message sent from the control base station if a new relay node is added under the control base station, wherein the update message carries information about a route between the control base station and the relay node under control of the control base station; and
updating, by the base station, the stored routing table according to the information about the route.

5. The method according to claim 4, further comprising:
reporting, by the relay node, the identity of the relay node to the control base station; and
receiving, by the control base station, the identity of the relay node, and generating the information about the route according to the identity of control base station and the identity of the relay node.

6. The method according to claim 2, wherein, the identity of the relay node comprises:
the identity of control base station corresponding to the relay node and an extension identity of control base station corresponding to the relay node, wherein the extension identity is used for differentiating relay nodes respectively under the same control base station; and
the obtaining the identity of control base station corresponding to the relay node according to the identity of the relay node comprises:
obtaining, by the base station, the identity of control base station from the identity of the relay node.

7. The method according to claim 1, wherein, the obtaining the identity of the relay node corresponding to the handover target cell of the user equipment comprises:
receiving, by a mobility management entity, the identity of a relay node reported by an base station, wherein the identity of the relay node is obtained by the base station according to a target cell identity reported by the user equipment; and
the obtaining the identity of control base station corresponding to the relay node according to the identity of the relay node comprises:
searching, by the mobility management entity, a stored routing table according to the identity of the relay node, so as to obtain the identity of control base station corresponding to the relay node.

8. The method according to claim 7, further comprising:
receiving, by the mobility management entity, an update message sent from the control base station if a new relay node is added under the control base station, wherein the update message carries information about a route between the control base station and the relay node under control of the control base station; and
updating, by the mobility management entity, the stored routing table according to the information about the route.

9. The method according to claim 8, further comprising:
reporting, by the relay node, the identity of the relay node to the control base station; and
receiving, by the control base station, the identity of the relay node, and generating the information about the route according to the identity of control base station and the identity of the relay node.

10. The method according to claim 1, wherein, the identity of the relay node comprises: the identity of control base station corresponding to the relay node and an extension identity, wherein the extension identity is used for differentiating relay nodes respectively under the same control base station;
the obtaining the identity of the relay node corresponding to the handover target cell of the user equipment comprises:
receiving, by a mobility management entity, the identity of a relay node reported by an base station, wherein the identity of the relay node is obtained and reported by the user equipment according to a target cell identity; and
the obtaining the identity of control base station corresponding to the relay node according to the identity of the relay node comprises:
obtaining, by the mobility management entity, the identity of control base station from the identity of the relay node.

11. The method according to claim 1, wherein:
the identity of the relay node is the same as the identity of control base station corresponding to the relay node;
the handover control request sent to the control base station carries a target cell identity; and
the control base station notifies the relay node of performinging access control for the UE comprises:
searching, by the control base station, for a relay node that serves a target cell according to the target cell identity, and notifying the search relay node to control the access of the User equipment.

12. The method according to claim 11, wherein, the searching, by the control base station, for the relay node that serves the target cell according to the target cell identity and notifying the search relay node of controlling the access of the user equipment comprises:
sending, by the control base station, a handover request message to all relay nodes controlled by the control base station, wherein the handover request message comprises the target cell identity; and
receiving, by the relay node, the handover request message, and if the target cell identity in the handover request message corresponds to a cell served by the Relay node, performing the access control for the user equipment.

13. The method according to claim 11, wherein, the searching, by the control base station, for the relay node that serves the target cell according to the target cell identity and notifying the search relay node comprises:
searching, by the control base station, a list of serving cells served by each relay node controlled by the control base station according to the target cell identity, and obtaining the relay node that serves the target cell, wherein the list of serving cells is reported by the relay node; and
notifying the search relay node of performing the access control for the user equipment.

14. The method according to any of claims 11 to 13, wherein, before the obtaining the identity of the relay node corresponding to the handover target cell of the user equipment, the method further comprises: if the relay node accesses the control base station, allocating, by the control base station, the identity of control base station as the identity of the relay node to the relay node.

15. A handover control method, comprising:
receiving, by a user equipment, a broadcast message sent from a relay node, wherein the broadcast message carries information about a routing relation between the relay node and a control base station on which the relay node belongs; and
sending, by the user equipment, information about the routing relation to an base station to which the user equipment is currently attached, so that the base station notifies the control base station corresponding to the relay node to perform access control for the user equipment according to the information about routing relation.

16. The method according to claim 15, wherein, the process of notifying, by the base station, the control base station corresponding to the relay node of performing the access control for the User equipment according to the information about routing relation comprises:
obtaining, by the base station, the control base station corresponding to the relay node according to the information about routing relation;
if a communication interface exists between the base station and the control base station, sending a handover control request to the control base station through the communication interface between base stations; and
notifying, by the control base station, the relay node to perform the access control for the user equipment.

17. The method according to claim 16, the method further comprising:
if no communication interface exists between the base station and the control base station, sending, by the base station, a handover control request to a mobility management entity , wherein the handover control request comprises an identity of the relay node and the routing relation;
obtaining, by a mobility management entity, the control base station corresponding to the relay node according to the routing relation;
sending, by the mobility management entity, the handover control request to the control base station; and
notifying, by the control base station, the relay node to perform the access control for the user equipment.

18. A handover control method, comprising:
obtaining an identity of a target cell to which a user equipment will hand over;
obtaining an identity of control base station corresponding to a relay node of the target cell according to the identity of the target cell; and
sending a handover control request to the control base station according to the identity of control base station, so that the control base station notifies the relay node to perform access control for the user equipment.

19. The handover control method according to claim 18, wherein the obtaining the identity of the target cell of the user equipment comprises:
receiving, by an base station, a target cell measurement report sent from the user equipment, wherein the target cell measurement report comprises: the identity of the target cell.

20. The handover control method according to claim 18, wherein, the obtaining the identity of control base station corresponding to the relay node of the target cell according to the identity of the target cell comprises:
searching, by the base station, a stored routing table according to the identity of the target cell, so as to obtain the identity of control base station corresponding to the relay node of the target cell.

21. The method according to claim 20, further comprising:
when a new relay node is added under the control base station, receiving, by the base station, an update message from the control base station or an O&M system , wherein the update message comprises information about a route between the control base station and the relay node under control of the control base station; and
updating, by the base station, the routing table according to the information about the route.

22. The handover control method according to claim 18, wherein, the sending the handover control request to the control base station according to the identity of control base station comprises:
sending, by the base station, the handover control request to the control base station through a mobility management entity.

23. A handover control apparatus, comprising:
a relay node identity obtaining unit, configured to obtain an identity of a Relay node corresponding to a handover target cell of a user equipment;
a control base station identity obtaining unit, configured to obtain a identity of control base station corresponding to the relay node according to the identity of the relay node obtained by the relay node identity obtaining unit; and
a handover control request sending unit, configured to send a handover control request to the control base station according to the identity of control base station obtained by the control base station identity obtaining unit, so that the control base station notifies the relay node of performing access control for the user equipment.

24. The apparatus according to claim 23, wherein, the control base station identity obtaining unit is configured to search a stored routing table according to the identity of the relay node, so as to obtain the identity of control base station corresponding to the relay node.

25. The apparatus according to claim 24, wherein, the control base station identity obtaining unit is further configured to: receive an update message from the control base station, wherein the update message comprises information about a route between the control base station and the relay node under control of the control base station; and update the stored routing table according to the information about the route.

26. The apparatus according to claim 23, wherein, the identity of the relay node comprises the identity of control base station and an extension identity, the extension identity being used for differentiating between relay nodes under the same control base station; and
the control base station identity obtaining unit is specifically configured to obtain the identity of control base station in the identity of the relay node.

27. The apparatus according to any of claims 23 to 26, wherein, the relay node identity obtaining unit is specifically configured to receive a target cell measurement report reported by the user equipment, the target cell measurement report comprising a target cell identity, and obtain the identity of the relay node corresponding to the target cell according to the target cell identity.

28. The apparatus according to any of claims 23 to 26, wherein, the relay node identity obtaining unit is specifically configured to receive the identity of the Relay node reported by an base station.

29. An access control apparatus, comprising:
a receiving unit, configured to receive a handover request message, the handover request message comprising an identity of a target cell of a user equipment; and
a handover controlling unit, configured to search for a relay node that serves the target cell according to the identity of the target cell, and notify the search Relay node of controlling access of the user equipment.

30. A network relay apparatus, comprising:
an information reporting unit, configured to report an identity of a relay node of itself and a list of served cells to a corresponding control base station; and
an access processing unit, configured to receive a notification from the control base station and perform access control for a user equipment.

31. A network relay apparatus, comprising:
a control base station Identity obtaining unit, configured to obtain an identity of control base station of the network relay apparatus;
a information about the route generating unit, configured to generate the information about the route according to the identity of control base station and an identity of a relay node of the network relay apparatus; and
a broadcasting unit, configured to broadcast the information about the route generated by the information about the route generating unit throughout cell coverage of the network relay apparatus.

32. A User equipment, comprising:
a broadcast message receiving unit, configured to receive a broadcast message sent by a relay node, wherein the broadcast message carries information about a routing relation between the relay node and a control base station of the relay node;
a information about the route sending unit, configured to send the routing relation information to an base station to which the user equipment is currently attached, so that the base station notifies the control base station corresponding to the relay node of performing access control for the User equipment according to the routing relation information.

33. A communication system, comprising a handover control apparatus, an access control apparatus, a relay node, and a user equipment, wherein:
the User equipment is configured to send an identity of the relay node corresponding to a handover target cell to the handover control apparatus, and access the target cell under control of the relay node;
the handover control apparatus is configured to: obtain the identity of the relay node corresponding to the handover target cell of the user equipment, obtain an identity of control base station corresponding to the relay node according to the identity of the relay node, and send a handover control request to the control base station according to the identity of control base station;
the access control apparatus is configured to receive the handover control request from the handover control apparatus, and notify the relay node of performing access control for the user equipment; and
the relay node is configured to receive the notification from the access control apparatus, and execute the access control for the user equipment.

34. A handover control apparatus, comprising:
a module configured to obtain an identity of a target cell to which a user equipment will hand over;
a module configured to obtain an identity of control base station corresponding to a relay node of the target cell according to the identity of the target cell; and
a module configured to send a handover control request to the control base station according to the identity of control base station, so that the control base station notifies the relay node of performing access control for the user equipment.
